# EUROPÄISCHE PATENTSCHRIFT

(11) **EP 4 103 410 B1**
(45) Veröffentlichungstag und Bekanntmachung des Hinweises auf die Patenterteilung: **17.01.2024**
(21) Anmeldenummer: 20816969.8
(22) Anmeldetag: 30.11.2020
(51) Int. Cl.: B29L 30/00, B60C 19/12, B60C 5/14, B29B 17/02, B29C 73/22

(54) **FAHRZEUGLUFTREIFEN MIT DICHTMITTELLAGE UND VERFAHREN ZUR DETEKTION EINES FAHRZEUGLUFTREIFENS MIT DICHTMITTELLAGE SOWIE ZUM RECYCLING EINES FAHRZEUGLUFTREIFENS MIT DICHTMITTEL**
VEHICLE TIRE WITH SEALANT LAYER AND METHOD FOR DETECTING A VEHICLE TIRE WITH SEALANT LAYER AND FOR THE RECYCLING OF A VEHICLE TIRE WITH SEALANT
PNEU DE VÉHICULE AVEC COUCHE D'ÉTANCHÉITÉ ET PROCÉDÉ POUR DÉTECTER UN PNEU DE VÉHICULE AVEC COUCHE D'ÉTANCHÉITÉ ET POUR LE RECYCLAGE D'UN PNEU DE VÉHICULE AVEC L'ETACHEMENT

(30) Priorität: 10.02.2020 DE 102020201586
(43) Veröffentlichungstag der Anmeldung: 21.12.2022
(73) Patentinhaber: Continental Reifen Deutschland GmbH, 30165 Hannover (DE)
(72) Erfinder: DOROSHENKO, Mikheil, 30165 Hannover (DE); TYBURSKI, Andreas, 30165 Hannover (DE)
(74) Vertreter: Continental Corporation
(86) Internationale Anmeldenummer: PCT/EP2020/083933
(87) Internationale Veröffentlichungsnummer: WO 2021/160312

(56) Entgegenhaltungen:
- EP-A1- 1 721 932
- EP-A1- 3 498 494
- EP-B1- 1 533 108
- EP-B1- 1 721 932
- EP-B1- 3 498 494
- JP-A- 2002 362 118

## Beschreibung

Die Erfindung betrifft einen Fahrzeugluftreifen, der eine Dichtmittellage wenigstens auf der dem Laufstreifen gegenüberliegenden Innenfläche aufweist, wobei die Dichtmittellage eine radial nach innen gerichtete in axialer Richtung, im Wesentlichen parallel zum Gürtelpaket, verlaufende Oberfläche aufweist. Die Erfindung betrifft auch ein Verfahren zur Detektion eines Fahrzeugluftreifens mit Dichtmittellage sowie ein Verfahren zum Recycling eines Fahrzeugluftreifens mit Dichtmittel.

Selbstdichtend ausgestaltete Fahrzeugluftreifen sind beispielsweise aus der DE 10 2006 059 286 A1 der Anmelderin bekannt. Hierbei werden Reifen-Standardkonstruktionen nachträglich mit einer Dichtmittellage versehen. Das selbsttätig abdichtende Dichtmittel ist eine selbsthaftende, viskose Dichtmasse, welche von radial innen im Projektionsbereich des Gürtelpakets auf die radial innerste Reifenlage, die weitgehend luftdicht ausgeführte Innenschicht, als Lage aufgetragen wird. Die Dichtmittelschicht ist in der Lage, Einstiche von bis zu fünf Millimetern Durchmesser selbständig abzudichten. Nach einem Durchstich durch den Laufstreifen bis durch die Innenschicht umschließt das Dichtmittel den eingedrungenen Fremdkörper vollständig, dichtet den Innenraum gegenüber der Umgebung ab und verhindert so einen Druckluftverlust des Reifens. Der Fahrer des Fahrzeuges ist nicht gezwungen, den defekten Reifen sofort durch ein vollwertiges Ersatzrad oder ein Notrad zu ersetzen. Das Dichtmittel zeichnet sich durch Luftdichtigkeit, starke Klebrigkeit und ausgewogenes Fließverhalten aus.

EP 1 721 932 A1 betrifft einen Gummiluftreifen mit eingebauter Abdichtschicht gegen Durchstiche, umfassend einen teilweise depolymerisierten Kautschuk oder ein teilweise depolymerisiertes Komposit-Polymernetzwerk.

JP 2002 362 118 A betrifft einen Luftreifen, bei dem ein Schlauch, der ein Dichtmittel enthält, spiralförmig in der Reifenumfangsrichtung als Pannenschutzschicht auf der Innenfläche des Reifens angeordnet ist.

EP 3 498 494 A1 betrifft einen Fahrzeugluftreifen mit einer Dichtmittellage und einer damit verbundenen Textillage, wobei die Zugfestigkeit der Textillage größer ist als die Zugfestigkeit der Dichtmittellage und gleichzeitig die Bruchdehnung der Dichtmittellage größer ist als die Bruchdehnung der Textillage.

Die starke Klebrigkeit des Dichtmittels erschwert jedoch das Recycling der Reifen. Üblicherweise werden Reifen -ohne Dichtmittel- beim Recycling zunächst zerkleinert. Sollte sich unter den Reifen einer befinden, der ein Dichtmittel aufweist, so ist das Zerkleinern durch die Klebrigkeit des Dichtmittels stark erschwert, da das Dichtmittel an der Zerkleinerungsvorrichtung klebt und die weitere Zerkleinerung immer weiter erschwert.

Optisch sind Fahrzeugluftreifen mit und ohne Dichtmittel auf den ersten Blick nicht oder kaum voneinander zu unterscheiden, da das Dichtmittel meist als schwarze Masse auf der schwarzen Innenwand des Reifens angebracht ist. Die Reifen müssten somit genauer Stück für Stück betrachtet werden.

Insbesondere bei einer Vielzahl von Reifen wäre aber eine individuelle Sichtung eines jeden Reifens durch einen Operator sehr aufwändig.

Der vorliegenden Erfindung liegt daher die Aufgabe zugrunde einen Fahrzeugluftreifen, der eine Dichtmittellage wenigstens auf der dem Laufstreifen gegenüberliegenden Innenfläche aufweist, wobei die Dichtmittellage eine radial nach innen gerichtete in axialer Richtung, im Wesentlichen parallel zum Gürtelpaket, verlaufende Oberfläche aufweist

(Fahrzeugluftreifen mit Dichtmittel), bereitzustellen, der einfacher von Fahrzeugluftreifen ohne Dichtmittel unterschieden werden kann.

Gelöst wird die Aufgabe dadurch, dass die Dichtmittellage auf ihrer radial nach innen gerichteten Oberfläche wenigstens ein Lumineszenzagens aufweist.

Dadurch dass Fahrzeugluftreifen mit Dichtmittel auf der nach radial innen gerichteten Oberfläche des Dichtmittels wenigstens ein Lumineszenzagens aufweisen, können die Reifen einfacher von Fahrzeugluftreifen ohne Dichtmittel unterschieden werden. Insbesondere kann die Unterscheidung in einem automatisierten Verfahren nach erfolgter Energiezufuhr mit einem Detektor, insbesondere einer Photodiode, erfolgen, ohne dass eine individuelle Sichtung des Reifens durch einen Operator notwendig ist.

Ferner kann aber auch ein Operator einen derartigen Reifen mit Dichtmittel durch die Lumineszenz schneller und eindeutiger erkennen.

Hierdurch ist das Recycling von Fahrzeugluftreifen mit Dichtmittel vereinfacht und erleichtert.

Die Vorgänge der Detektion mittels Detektors und Erkennung durch einen Operator werden im Rahmen der vorliegenden Erfindung beide mit "Detektieren" bezeichnet.

Dadurch, dass lediglich die Oberfläche des Dichtmittels wenigstens ein Lumineszenzagens aufweist, können die Reifen voneinander unterschieden werden, ohne dass es notwendig ist, das gesamte Dichtmittel lumineszierend auszugestalten.

In der EP 1533108 B1 wird ein Fahrzeugluftreifen mit farbigem nicht-schwarzem Dichtmittel offenbart, sodass durch das Fließen des Dichtmittels zur Einstichstelle im Pannenfall die Einstichstelle von außen besser erkannt wird.

Dieses Problem liegt vorliegender Erfindung nicht zugrunde. Der erfindungsgemäße Fahrzeugluftreifen hat gegenüber dem Reifen gemäß der EP 1533108 B1 die Vorteile, dass weniger Lumineszenzagens notwendig ist und das Dichtmittel zur Verstärkung vorteilhafte Ruße enthalten kann, sodass die Herausforderungen mit Kieselsäure als Füllstoff vermieden werden können. Ferner kann die Detektion über Lumineszenz gegenüber einer farbigen Markierung schneller und eindeutiger sein.

Im Folgenden wird die Erfindung weiter erläutert und weitere vorteilhafte Ausführungsformen beschrieben. Soweit nicht anders angegeben oder technisch nicht machbar, können verschiedene Ausführungsformen auch miteinander kombiniert werden.

Unter "Lumineszenzagens" wird eine Substanz / ein Agens verstanden, welches lumineszierende Eigenschaften aufweist. Derartige Substanzen sind auch unter dem Begriff "Fluorophore" bekannt.

Gemäß Römpp Online Chemie Lexikon (letzte Aktualisierung August 2008) versteht man "unter Lumineszenz ... die Emission von Licht im sichtbaren, UV- und IR-Spektralbereich von Gasen, Flüssigkeiten und Festkörpern nach Energiezufuhr".

Je nach Art der Energiezufuhr kann man beispielsweise zwischen Photolumineszenz, Chemilumineszenz, Thermolumineszenz und Radiolumineszenz unterscheiden.

Arten der Lumineszenz, die insbesondere durch Photolumineszenz verursacht werden, sind ferner Fluoreszenz und Phosphoreszenz, wobei nach der zeitlichen Dauer zwischen Anregung (Absorption von Licht) und der Lumineszenz ((Nach)Leuchten durch Emission) unterschieden wird.

Im Rahmen der vorliegenden Erfindung soll das "Lumineszenzagens" nicht von vornherein durch eine (formelle) Unterscheidung der verschiedenen Lumineszenzarten hinsichtlich Art der Anregung oder der Dauer der Emission eingeschränkt sein.

Gemäß vorteilhafter Ausführungsformen der Erfindung ist es bevorzugt, dass Lumineszenzagens durch Licht anregbar ist und damit als Photolumineszenzagenz bezeichnet werden kann. Ferner ist es bevorzugt, dass das Lumineszenzagens fluoreszierende oder phosphoreszierende Eigenschaften aufweist und damit ein Fluoreszenzagens oder Phosphoreszenzagens ist.

Gemäß vorteilhafter Ausführungsformen der Erfindung ist es bevorzugt, dass das Lumineszenzagens Licht im Wellenlängenbereich von 200 bis 700 nm absorbiert und im Bereich von 350 bis 800 nm emittiert. Hierdurch kann es mit UV-Licht oder sichtbarem Licht angeregt werden und Licht in einem Bereich emittieren, der für Menschen sichtbar ist und/oder mittels einer Photodiode gemessen und damit detektiert werden kann.

Bei dem das Lumineszenzagens kann es sich prinzipiell um jegliche Substanz handeln, die lumineszierende Eigenschaften aufweist, und dabei beispielsweise ausgewählt ist aus der Gruppe umfassend
Kumarin-Derivate, wie Methoxykumarin,
Peptide oder Proteine, wie das grün fluoreszierende Protein (Abkürzung GFP; *engl.* "green fluorescent protein"),
Rhodamine,
organische Substanzen, die unter den Handelsnamen Alexa Fluor ^{®} erhältlich sind, wie zum Beispiel Alexa Fluor ^{®} 350, Alexa Fluor ^{®} 405, Alexa Fluor ^{®} 488, Alexa Fluor ^{®} 532, etc,
Quantenpunkte (*engl.* "quantum dots"), wie zum Beispiel QDOT ^{®} 525, QDOT ^{®} 565, QDOT ^{®} 665.

Insbesondere können sämtliche unter folgenden Quellen offenbarte Agenzien verwendet werden:
https://docs.abcam.com/pdf/immunology/fluorochrome guide.pdf
https://www.biosyn.com/Images/ArticleImages/Comprehensive%20fluorophore%201ist.pd f
https://en.wikipedia.org/wiki/Fluorophore
https://en.wikipedia.org/wiki/Ethidium bromide

Für den Fall, dass es sich bei dem Lumineszenzagens um ein Molekül handelt, beträgt das Gewichtsmittel des Molekulargewichtes (Mw) beispielsweise und insbesondere von 200 bis 250.000 g/mol.

Für den Fall, dass es sich bei dem Lumineszenzagens um Quantenpunkte handelt, beträgt die Teilchengröße (gemessen mit dynamischer Lichtstreuung) beispielsweise von 2 bis 2000 nm.

Erfindungswesentlich ist, dass die Dichtmittellage auf ihrer radial nach innen gerichteten Oberfläche wenigstens ein Lumineszenzagens aufweist.

Hierbei können auch zwei oder mehrere verschiedene Agenzien vorhanden sein. "Wenigstens ein" bezieht sich auf die Art des Lumineszenzagens. Sämtliche Ausführungen gelten sowohl für das Vorhandensein einer Art an Lumineszenzagens oder zwei oder mehreren Arten an Lumineszenzagenzien, sofern nicht ausdrücklich anders dargestellt.

Dabei können bereits geringste Mengen die erwünschte lumineszierende Wirkung haben.

Unter dem Ausdruck "auf ihrer radial nach innen gerichteten Oberfläche" ist eine Position zu verstehen, die in Richtung des Reifeninneren, in radialer Richtung vom Laufstreifen weg, auf der Dichtmittellage angeordnet ist.

Dabei muss nicht die gesamte vorstehend genannte Oberfläche mit dem Lumineszenzagens bedeckt sein.

Gemäß vorteilhafter Ausführungsformen ist das Lumineszenzagens umlaufend in Form eines oder mehrerer Streifen(s) angeordnet, wobei der oder die Streifen durchgängig oder unterbrochen sein kann/können. Ein oder mehrere Streifen lassen sich auf einfache und automatisierte Weise umlaufend durchgängig oder abschnittsweise aufbringen.

Zwei oder mehr Streifen sind beispielsweise parallel oder nicht parallel zueinander angeordnet.

Gemäß vorteilhafter Ausführungsformen ist das Lumineszenzagens in einzelnen räumlichen (d. h. voneinander abgetrennten) Bereichen auf der Oberfläche der Dichtmittellage angeordnet. Die Bereiche können systematisch oder zufällig (statistisch) verteilt sein.

Bereits geringste Mengen in im Verhältnis zur Oberfläche kleinen Bereichen mit einem Durchmesser kleiner als 1 mm können bereits den technischen Vorteil hervorrufen, dass die Reifen detektiert und somit leichter von Reifen ohne Dichtmittel und Lumineszenzagens unterschieden werden können.

Gemäß weiterer vorteilhafter Ausführungsformen bedeckt das Lumineszenzagens 0,01 bis 100 %, bevorzugt 0,01 bis 90 %, insbesondere 1 bis 80 %, beispielsweise 1 bis 10 %, der radial nach innen gerichteten Oberfläche.

Bei der Detektion kann es ggf. hilfreich sein, dass der Reifen und/oder die Anregungsquelle und ggf. der Detektor rotiert wird.

Im Folgenden werden verschiedene Ausführungsformen beschrieben, wie das Lumineszenzagens auf die Dichtmitteloberfläche aufgebracht werden kann. Sämtliche Ausführungsformen sind mit den beschriebenen möglichen Anordnungen und der sich ergebenden Bedeckung der Oberfläche des Dichtmittels kombinierbar.

Gemäß vorteilhafter Ausführungsformen der Erfindung ist das Lumineszenzagens mittels einer Dispersion, insbesondere Suspension oder Emulsion, oder einer Lösung aufgetragen, wobei die Dispersion oder die Lösung von 1 bis 80 Gew.-% an Lumineszenzagenzien enthält.

Die Angabe in Gew.-% bezieht sich auf die Gesamtmasse der Dispersion oder Lösung vor dem Trocknen.

In der Dispersion ist gemäß vorteilhafter Ausführungsformen wenigstens ein Bindemittel, wie Polystyrol oder Poly-methylmetacrylat oder Styrol-Acrylat-Copolymer oder Polyvinylacetat, enthalten.

Bevorzugt handelt es sich bei der Dispersion um eine Suspension. Das oder die Lumineszenzagenzien sind gemäß dieser Ausführungsform in einer Flüssigkeit suspendiert.

Die Angabe in Gew.-% bezieht sich auf die Gesamtmasse der Suspension vor dem Trocknen.

Eine Suspension lässt sich einfach und materialsparend auftragen.

Die Flüssigkeit der Suspension kann jede denkbare Flüssigkeit sein, die mit dem jeweiligen Dichtmittel kompatibel ist.

Gemäß vorteilhafter Ausführungsformen der Erfindung handelt es sich um eine wässrige Suspension, welche besonders umweltfreundlich ist.

Gemäß weiterer vorteilhafter Ausführungsformen der Erfindung ist das Lumineszenzagens in einer Lösung gelöst, wobei die Lösung wenigstens ein Lösungsmittel und von 1 bis 80 Gew.-%, bevorzugt von 5 bis 50 Gew.-%, besonders bevorzugt von 10 bis 30 Gew.-%, ganz besonders bevorzugt 20 bis 30 Gew.-%, an Lumineszenzagenzien enthält.

Die Angabe in Gew.-% bezieht sich auf die Gesamtmasse der Lösung vor dem Trocknen.

Auch in der Lösung ist gemäß vorteilhafter Ausführungsformen wenigstens ein Bindemittel, wie Polystyrol oder Poly-methylmetacrylat oder Styrol-Acrylat-Copolymer oder Polyvinylacetat, enthalten.

Eine Lösung lässt sich einfach auftragen.

Das oder die Lösungsmittel kann/können jede denkbare Flüssigkeit sein, die mit dem jeweiligen Dichtmittel kompatibel ist.

Gemäß vorteilhafter Ausführungsformen der Erfindung handelt es sich um eine wässrige Lösung, welche besonders umweltfreundlich und nicht brennbar ist.

Das Lumineszenzagens ist gemäß vorteilhafter Ausführungsformen wasserlöslich.

Gemäß vorteilhafter Ausführungsformen ist es bevorzugt, dass die Flüssigkeit der Lösung oder Dispersion, wie insbesondere Suspension oder Emulsion, Wasser umfasst, was insbesondere die oben genannten Vorteile hat.

Das Lumineszenzagens ist gemäß vorteilhafter Ausführungsformen hydrophil und in Wasser gelöst oder hydrophob und in Wasser dispergiert oder teilweise in Wasser gelöst.

Gemäß weiterer vorteilhafter Ausführungsformen der Erfindung handelt es sich um wenigstens ein organisches Lösungsmittel. Das organische Lösungsmittel kann prinzipiell jedes dem Fachmann bekannte geeignete Lösungsmittel sein, wie Alkohole (Einfach- oder Mehrfachalkohole), Ketone, Ester, Aldehyde, Aromaten, Alkaen wie Hexan, oder Ether, wie Petrolether.

Das organische Lösungsmittel ist gemäß bevorzugter Ausführungsformen ausgewählt aus Lösungsmitteln, die mit dem Dichtmittel und den übrigen Reifenbauteilen kompatibel sind bzw. diese nicht aufquellen lassen oder die Bestandteile lösen, wie insbesondere einfache Alkohole, wie Ethanol oder Isopropanol. Diese sind zudem vergleichsweise umweltfreundlich und die meisten wasserunlöslichen Lumineszenzagenzien sind darin gut lösbar.

Gemäß weiterer vorteilhafter Ausführungsformen der Erfindung ist das Lumineszenzagens als Feststoff, insbesondere in Pulverform, aufgetragen. Hierdurch kann auf weitere Substanzen verzichtet werden, was ökologische und ökonomische Vorteile hat. Ferner ist hierbei kein weiterer Prozessschritt zum Trocknen notwendig.

Das Pulver kann mittels Luftzerstäubung, beispielsweise mittels Pistole, oder elektrostatisch auf das Dichtmittel aufgetragen sein.

Gemäß weiterer vorteilhafter Ausführungsformen der Erfindung ist das Lumineszenzagens Bestandteil einer Folie ist. Auch eine Folie lässt sich einfach und materialsparend und insbesondere mit konstanter Schichtdicke auftragen.

Die Folie kann - wie die anderen Aufbringungsmöglichkeiten - beispielsweise die gesamte Oberfläche des Dichtmittels oder nur Teile davon bedecken.

Gemäß vorteilhafter Weiterbildungen der Erfindung ist das Lumineszenzagens (insbesondere in Pulverform) oder das Medium, in der es aufgebracht ist (insbesondere Dispersion, Lösung oder Folie) zugleich klebrigkeitsreduzierend ausgestaltet. Hierzu können ggf. weitere Substanzen vorhanden sein.

Beispielsweise kann wie in der DE 202015006945 U1 offenbart, zusätzlich wenigstens ein Alkalisalz wenigstens einer Fettsäure und/oder wenigstens ein Erdalkalisalz wenigstens einer Fettsäure vorhanden sein.

Gemäß vorteilhafter Ausführungsformen ist das Lumineszenzagens mit einer Schichtdicke (gemessen in radialer Richtung (rR) senkrecht zur axialen Richtung (aR) des Fahrzeugreifens) von 100 nm (Nanometer) bis 3500 µm (Mikrometer) aufgetragen. Gemäß vorteilhafter Ausführungsformen der Erfindung beträgt die Schichtdicke von 1 bis 400 µm (Mikrometer), besonders bevorzugt 5 µm bis 100 µm.

Gemäß weiterer vorteilhafter Ausführungsformen der Erfindung beträgt die Schichtdicke 2500 bis 3500 µm (Mikrometer). Gemäß dieser Ausführungsform können beispielsweise Streifen (Sticker) mit den Maßen 100mm × 10mm × 3 mm verwendet werden.

Durch die beschriebenen Schichtdicken und Ausführungsformen kann das Dichtmittel möglichst materialsparend lumineszierend markiert werden.

Das Dichtmittel ist gemäß vorteilhafter Ausführungsformen der Erfindung schwarz oder nahezu schwarz. Dies bedeutet, dass das Dichtmittel beispielsweise einen Farbton gemäß den RAL-Farbcodes 9004 bis 9007, 9011, 9017 bis 9023 aufweist.

Das Dichtmittel kann auch braun oder grau oder durchsichtig sein, wobei bei einem durchsichtigen Dichtmittel der Innerliner des Reifens schwarz durchscheint.

Das Dichtmittel enthält hierzu bevorzugt wenigstens einen Füllstoff, durch welchen es den schwarzen Farbton erhält. Hierbei kann es sich insbesondere um Ruß und/oder Graphit und/oder Graphen und/oder Kohlenstoffnanoröhrchen handeln.

Unter Ruß sind insbesondere Industrieruße und Pyrolyseruße zu verstehen.

Besonders bevorzugt enthält das Dichtmittel wenigstens einen Ruß, ganz besonders bevorzugt wenigstens einen Industrieruß.

Dies hat den Vorteil, dass die Kohäsion des Dichtmittels erhöht und die Klebrigkeit des Dichtmittels während des Herstellverfahrens erniedrigt wird. Gleichzeitig werden die Ortsfestigkeit und die Reißeigenschaften des Dichtmittels verbessert.

Als Ruße sind im Rahmen der vorliegenden Erfindung prinzipiell alle dem Fachmann bekannten Ruß-Typen denkbar.

Gemäß einer vorteilhaften Ausführungsform der Erfindung wird ein Ruß eingesetzt, der eine Jodadsorptionszahl gemäß ASTM D 1510 von 20 bis 180 g/kg, besonders bevorzugt 30 bis 140 g/kg, und eine DBP-Zahl gemäß ASTM D 2414 von 30 bis 200 ml/100 g, bevorzugt 90 bis 180 ml/100g, besonders bevorzugt 110 bis 180 ml/100g, aufweist. Gemäß einer weiteren bevorzugten Ausführungsform der Erfindung wird ein Ruß des Typs N326 verwendet.

Es ist auch ein Gemisch von zwei oder mehreren Rußen denkbar.

Bei dem Dichtmittel kann es sich um alle geeigneten und dem Fachmann bekannten Dichtmittelzusammensetzungen handeln, wie beispielsweise auf Silikonbasis, oder auf Basis von Polyurethan oder basierend auf der Vernetzung eines Kautschuks und/oder eines Polyolefins.

Gemäß einer vorteilhaften und beispielsweisen Ausführungsform enthält das Dichtmittel wenigstens einen Kautschuk. Bevorzugt enthält es 15 bis 60 Gew.-% wenigstens eines Kautschuks.

Bei dem Kautschuk kann es sich um alle dem Fachmann bekannten Kautschuktypen handeln. Es ist auch ein Gemisch verschiedener Kautschuke denkbar.

Gemäß einer bevorzugten Ausführungsform der Erfindung handelt es sich bei dem Kautschuk um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR) und/oder Silikonkautschuk.

Diese Kautschuktypen sind für die Verarbeitungstemperaturen bei der Herstellung des Dichtmittels und später bei der Anwendung, insbesondere im Fahrzeugluftreifen, besonders gut geeignet.

Gemäß beispielhafter Ausführungsformen kann das Dichtmittel insbesondere natürliches und/oder synthetisches Polyisopren, bevorzugt natürliches Polyisopren, enthalten.

Hierbei kann beispielsweise fester Naturkautschuk (NR) mit flüssigem Polyisopren in Kombination verwendet werden.

Beispielsweise kann das Dichtmittel Naturkautschuk und Styrol-Butadien-Kautschuk (SBR), beispielsweise ESBR (emulsionspolymerisierten Styrol-Butadien-Kautschuk) enthalten. Die Vernetzung kann auf Peroxiden basieren und/oder auf einer Schwefelvernetzung. Beispielsweise kann Schwefel in Kombination mit peroxidischen Agenzien, wie beispielsweise "VAROX-Organic-Peroxide-Crosslinking-Agents", der Firma Vanderbilt Chemicals, LLC verwendet werden. Das Verhältnis von NR zu ESBR beträgt beispielsweise 30 bis 40 zu 60 bis 70 Gew.-%.

Gemäß weiteren beispielhaften Ausführungsformen handelt es sich um ein Silikonbasiertes Dichtmittel.

Gemäß einer vorteilhaften und beispielsweisen Ausführungsform basiert das Dichtmittel auf der Vernetzung eines Kautschuks und/oder Polyolefins. Für den Kautschuk gelten die obigen Ausführungen.

Dem Fachmann ist klar, dass sämtliche genannten Bestandteile im vernetzten Dichtmittel zumindest teilweise in chemisch veränderter Form, insbesondere als Derivate, vorliegen.

Besonders bevorzugt wird wenigstens Butylkautschuk (IIR) verwendet. Butylkautschuk eignet sich besonders gut, da er eine vergleichsweise hohe Luftdichtigkeit aufweist.

Gemäß einer besonders vorteilhaften Ausführungsform der Erfindung enthält das selbsttätig abdichtende Reifendichtmittel 10 bis 50 Gew.-% wenigstens eines Polyolefins. Hiermit wird ein optimales Fließverhalten bei einer gleichzeitig guten Herstellbarkeit (Prozessierbarkeit) des Dichtmittels erzielt.

Das wenigstens eine Polyolefin weist bevorzugt ein Zahlenmittel der Molekulargewichtsverteilung Mₙ gemäß GPC von 400 bis 2500 g/mol, besonders bevorzugt 800 bis 2500 g/mol, ganz besonders bevorzugt 800 bis 1600 g/mol, wiederum bevorzugt 1200 bis 1600 g/mol, wiederum besonders bevorzugt 1200 bis 1400 g/mol, beispielsweise 1300 g/mol, auf.

Ein Polyolefin mit den genannten Bereichen für das Mₙ ist besonders geeignet, um die gewünschte Fließfähigkeit bei gleichzeitiger Abdichtwirkung des Dichtmittels im Pannenfall zu erzeugen.

Hierbei ist es besonders bevorzugt, dass das wenigstens eine Polyolefin wenigstens ein Polybuten ist.

Dieses stellt die Klebrigkeit des fertigen Dichtmittels ein und bestimmt die Fließfähigkeit im Produktionsprozess sowie die lokale Ortsfestigkeit des fertigen Dichtmittels.

Es kann sich auch um ein Gemisch zweier oder mehrerer Polybutene mit jeweils einem Mₙ von 400 bis 2500 g/mol handeln, wobei sich die Polybutene im Mₙ unterscheiden können. Geeignete Polybutene, auch Polyisobutene genannt, sind beispielsweise unter den Handelsnamen Indopol^{®} Polybutene der Firma INEOS Capital Limited erhältlich.

Es ist auch ein Gemisch wenigstens eines Polybutens mit wenigstens einem weiteren Polyolefin denkbar.

Dem Fachmann ist klar, dass die genannten Bestandteile im vernetzten Dichtmittel zumindest teilweise in chemisch veränderter Form, insbesondere als Derivate, vorliegen.

Bevorzugt basiert das Dichtmittel auf der Vernetzung durch wenigstens einen Vernetzer, der ausgewählt ist aus der Gruppe enthaltend, besonders bevorzugt bestehend aus, Polymethylolharz und Divinylbenzol und Chinonen. Das Chinon ist bevorzugt ein Chinondioxim, beispielsweise Dibenzoylchinondioxim oder para-Benzochinondioxim. Besonders bevorzugt ist para-Benzochinondioxim.

Bevorzugt basiert das Dichtmittel auf der Vernetzung durch wenigstens einen Vernetzer in Kombination mit einem Vernetzungsinitiator, wobei der Vernetzungsinitiator bevorzugt ausgewählt aus der Gruppe enthaltend Bleioxid und andere Metalloxide und peroxidische Verbindungen. Der Vernetzungsinitiator ist eine chemische Verbindung, welche die Vernetzung des Dichtmittels initiiert.

Eine peroxidische Verbindung ist eine chemische Verbindung, die wenigstens eine Peroxid-Einheit, also -O-O- enthält (wobei O = Sauerstoff). Es können auch mehrere Peroxide eingesetzt werden. Das oder die Peroxid(e) sind bevorzugt ausgewählt aus der Gruppe bestehend aus Diarylperoxiden, Diacylperoxiden und Peroxyestern.

Der Vernetzungsinitiator kann als reine Substanz oder in einem Gemisch zugegeben werden. Im Falle eines Gemisches, beispielsweise von 50 Gew.-% Dibenzoylperoxid in Dibutylmaleat, geht nur die Menge des enthaltenen Peroxides in die Menge an Vernetzungsinitiator mit ein, sodass in den angegebenen Mengen des wenigstens einen Vernetzungsinitiators Begleitsubstanzen wie Dibutylmaleat nicht eingerechnet sind.

Das Dichtmittel kann ferner weitere Bestandteile enthalten,
wie insbesondere schwarz färbende Substanzen, wie die oben genannten Füllstoffe, insbesondere Ruß,
sowie ggf. weitere Füllstoff(e) wie insbesondere Kieselsäure,
sowie gegebenenfalls weitere Zusatzstoffe, wie z. B. Klebrigmacher,
Weichmacher, wie z. B. Öl(e), sowie Zinkoxid und/oder Schwefel.

Gemäß einer weiteren bevorzugten Ausführungsform der Erfindung umfasst der Füllstoff wenigstens eine Kieselsäure (engl. "silica"). Die Begriffe "Kieselsäure" und "Silika" werden im Rahmen der vorliegenden Erfindung synonym verwendet.

Hierdurch wird eine optimale Verstärkung des Dichtmittels erzielt und eine gute Viskositätskontrolle und -einstellung ermöglicht. Zudem wird mit wenigstens einer Kieselsäure die Kohäsion des Dichtmittels erhöht und die Klebrigkeit des Dichtmittels während des Herstellverfahrens erniedrigt wird. Gleichzeitig werden die Ortsfestigkeit und die Reißeigenschaften des Dichtmittels verbessert.

Es ist auch ein Gemisch von zwei oder mehreren Kieselsäuren denkbar.

Bei den Kieselsäuren kann es sich um die dem Fachmann bekannten Kieselsäuren, die als Füllstoff für Reifenkautschukmischungen geeignet sind, handeln. Als Kieselsäuren können somit z. B. sowohl jene des Typs Ultrasil^{®} VN3 (Handelsname) der Firma Evonik als auch Kieselsäuren mit einer vergleichsweise niedrigen BET-Oberfläche (wie z. B. Zeosil^{®} 1115 oder Zeosil^{®} 1085 der Firma Solvay) als auch hoch dispergierbare Kieselsäuren, so genannte HD-Kieselsäuren (z. B. Zeosil^{®} 1165 MP der Firma Solvay) verwendet werden.

Ferner ist ein Gemisch der genannten Füllstoffe denkbar und bevorzugt, wie insbesondere wenigstens ein Industrieruß in Kombination mit wenigstens einer Kieselsäure, wobei sich ebenfalls die genannten Vorteile ergeben.

Das Dichtmittel enthält gemäß vorteilhafter Ausführungsformen wenigstens einen Klebrigmacher, und zwar insbesondere für den Fall, dass das Dichtmittel nicht bereits aufgrund der enthaltenen Bestandteile, insbesondere der Polymere eine ausreichende Klebrigkeit aufweist. Unter "Klebrigmacher" wird prinzipiell jede Substanz verstanden, die die Klebrigkeit des Dichtmittels erhöht.

Gemäß vorteilhafter Ausführungsformen der Erfindung handelt es sich bei dem Klebrigmacher um wenigstens ein Kohlenwasserstoffharz.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist.

Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können.

Das Kohlenwasserstoffharz kann ein Homopolymer oder ein Copolymer sein. Unter Homopolymer wird in der vorliegenden Anmeldung ein Polymer verstanden, welches gemäß Römpp Online (Auszug vom 02.01.2017, letzte Aktualisierung des Artikels August 2008) "aus Monomeren nur einer Art entstanden ist".

Unter Copolymer wird im Rahmen der vorliegenden Erfindung ein Polymer verstanden, welches aus mehreren, d.h. zwei oder mehr, verschiedenen Monomeren aufgebaut ist. Im Rahmen der vorliegenden Erfindung kann das Kohlenwasserstoffharz daher z.B. auch ein Copolymer aus drei verschiedenen Monomeren sein.

Bei den Monomeren kann es sich um alle dem Fachmann bekannten Monomere von Kohlenwasserstoffharzen handeln, wie aliphatische Monomere, insbesondere aliphatische Cs-Monomere, weitere ungesättigte Verbindungen, die kationisch polymerisiert werden können, enthaltend Aromaten und/oder Terpene und/oder Alkene und/oder Cycloalkene. Bevorzugte Monomere sind insbesondere C₅ und C₉-Monomere.

Bei den Aromaten (aromatische Monomere) kann es sich beispielsweise um alpha-Methylstyrol und/oder Styrol und/oder Vinyltoluol und/oder Inden und/oder Cumaron und/oder Methylinden und/oder Methylcumaron und/oder Phenol handeln.

Bevorzugt handelt es sich bei den aromatischen Monomeren um alpha-Methylstyrol und/oder Styrol und/oder Vinyltoluol und/oder Inden und/oder Cumaron und/oder Methylinden und/oder Methylcumaron.

Gemäß Römpp Online ist der Begriff "Olefine" die "Gruppenbezeichnung für acyclische und cyclische aliphatische Kohlenwasserstoffe mit einer oder mehreren reaktiven C=C-Doppelbindungen im Molekül, die heute besser als Alkene bzw. Cycloalkene bezeichnet werden, in weiterem Sinne auch Bezeichnung für deren substituierte Derivate...." Im Rahmen der vorliegenden Erfindung werden daher ungesättigte Terpene, Alkene und Cycloalkene unter den Oberbegriff Olefine zusammengefasst.

Bei den Alkenen kann es sich beispielsweise um 1-Buten und/oder 2-Buten und/oder Butadien handeln.

Gemäß einer bevorzugten Ausführungsform der Erfindung handelt es sich bei dem Kohlenwasserstoffharz um wenigstens ein aliphatisches Harz, also ein Harz welches keine aromatischen Ringsysteme enthält. Ein derartiges Harz besteht zu 100 Gew.-% aus aliphatischen Monomeren bzw. dessen Derivaten.

Gemäß einer weiteren Ausführungsform der Erfindung besteht das Harz zu 10 bis 99 Gew.-%, bevorzugt 50 bis 99 Gew.-%, besonders bevorzugt 70 bis 99 Gew.-%, aus aliphatischen und zu 1 bis 90 Gew.-%, bevorzugt 1 bis 50 Gew.-%, besonders bevorzugt 1 bis 30 Gew.-% aus aromatischen Monomeren.

Gemäß einer bevorzugten Ausführungsform der Erfindung handelt es sich bei dem Kohlenwasserstoffharz um wenigstens ein Harz, welches wenigstens aus Cs-Monomeren aufgebaut ist und dem Fachmann als sogenanntes Cs-Harz bekannt ist. Hiermit werden besonders gute Eigenschaften des Dichtmittels, insbesondere ein optimiertes Fließverhalten bei gleichzeitig guter Klebrigkeit, erzielt.

Bei den aliphatischen Cs-Monomeren kann es sich um Monomere der Cs-Erdölfraktion, z.B. Isopren, und/oder Monomere der Terpene und/oder Cycloolefine und/oder Olefine, wie z.B. Penten, handeln. Unter C₅ ist zu verstehen, dass diese Monomere aus fünf Kohlenstoffatomen aufgebaut sind.

Ferner ist dem Fachmann bekannt, dass die Cs-Erdölfraktion außer aliphatischen Monomeren mit fünf Kohlenstoffatomen andere aliphatische Monomere (Bausteine) mit z.B. vier, also C₄-Monomere, oder sechs Kohlenstoffatomen, Ce-Monomere, enthalten kann.

Gemäß vorteilhafter Ausführungsformen der Erfindung enthält das Dichtmittel 2 bis 30 Gew.-% wenigstens eines Kohlenwasserstoffharzes als Klebrigmacher. Bevorzugt beträgt die Menge des wenigstens einen Kohlenwasserstoffharzes 2 bis 20 Gew.-%.

Mit derartigen bevorzugten und besonders bevorzugten Mengen werden die Klebrigkeit und die Viskosität des Dichtmittels weiter optimiert.

Gemäß vorteilhafter Ausführungsformen der Erfindung enthält das Dichtmittel folgende Bestandteile in folgenden Mengen:
- 10 bis 50 Gew.-% wenigstes eines Polyolefins, bevorzugt wenigstens eines Polybutens, und
- 2,0 bis 30 Gew.-% wenigstens eines Klebrigmachers und
- 15 bis 60 Gew.-% wenigstens eines Kautschuks und
- 2,0 bis 22 Gew.-% wenigstens eines Füllstoffs und
- 1,0 bis 3,0 Gew.-% wenigstens eines Vernetzers und
- 1,8 bis 4,8 Gew.-% wenigstens eines Vernetzungsinitiators.

Die Angaben in Gew.-% beziehen sich jeweils auf die Gesamtmenge an Dichtmittel.

Die Dichtmittelzusammensetzung kann durch bekannte Verfahren und Vorrichtungen hergestellt werden, insbesondere durch intensives Mischen in einem Mischer oder Extruder, insbesondere einem Doppelschneckenextruder.

Das Dichtmittel wird mittels dem Fachmann bekannten Verfahren und Vorrichtungen auf die Reifeninnenseite aufgebracht.

Das Lumineszenzagens wird je nach seiner Art auf die nach radial innen gerichtete Oberfläche des Dichtmittels aufgebracht. Insbesondere kann es als Pulver oder als Suspension, Emulsion oder Lösung oder als Bestandteil einer Folie aufgetragen werden.

Ein weiterer Gegenstand der Erfindung ist ein Verfahren zur Detektion eines erfindungsgemäßen Fahrzeugluftreifens zum Unterscheiden von Fahrzeugluftreifen aufweisend ein Dichtmittel gegenüber Fahrzeugluftreifen ohne Dichtmittel.

Bei dem erfindungsgemäßen Verfahren wird die Dichtmittellage aufgrund aufgrund des wenigstens einen Lumineszenzagenzes nach Energiezufuhr optisch von einem Operator oder mittels eines Detektors erkannt wird.

Bei dem Detektor kann es sich insbesondere um einer Photodiode handeln.

Geeignete Detektoren sind dem Fachmann bekannt und sind üblicherweise computerunterstützt.

Es kann sich ferner um ein Handgerät handeln oder einen Detektor, der in einem automatisierten Verfahren über einen Roboter verwendet wird.

Je nach Bedeckung der Oberfläche des Dichtmittels mit dem wenigstens einen Lumineszenzagens kann es vorteilhaft sein den Reifen und/oder den Detektor zu rotieren, Ein weiterer Gegenstand der Erfindung ist ein Verfahren zum Recycling von erfindungsgemäßen Fahrzeugluftreifen umfassend wenigstens die folgenden Verfahrensschritte:
A) Bereitstellung des zu recycelnden Fahrzeugluftreifens;
B) Durchführung des erfindungsgemäßen Verfahrens zur Detektion eines erfindungsgemäßen Fahrzeugluftreifens aufgrund der Lumineszenz;
C) Abtrennen des Dichtmittels von dem Fahrzeugluftreifen;
D) anschließende Zerkleinerung des Fahrzeugluftreifens ohne Dichtmittel.

Gemäß vorteilhafter Ausführungsformen erfolgen die Verfahrensschritte A) bis D) automatisiert.

Ein weiterer Gegenstand der Erfindung ist ein Verfahren zum Recycling von Fahrzeugluftreifen umfassend wenigstens die folgenden Verfahrensschritte:
a) Bereitstellung von zu recycelnden Fahrzeugluftreifen;
b) Durchführung des erfindungsgemäßen Verfahrens zur Detektion eines erfindungsgemäßen Fahrzeugluftreifens, um Fahrzeugluftreifen mit Dichtmittel von Fahrzeugluftreifen ohne Dichtmittel zu unterscheiden;
c) Räumliche Separation von Fahrzeugluftreifen aufweisend ein Dichtmittel von Fahrzeugluftreifen ohne Dichtmittel;
d) Recycling von Fahrzeugluftreifen ohne Dichtmittel umfassend die Zerkleinerung der Fahrzeugluftreifen;
e) Überführung von Fahrzeugluftreifen aufweisend ein Dichtmittel zu einem separaten Recycling-Prozess umfassend das Abtrennen des Dichtmittels und erst die anschließende Zerkleinerung der Fahrzeugluftreifen.

Gemäß vorteilhafter Ausführungsformen erfolgen die Verfahrensschritte a) bis e) automatisiert. Gemäß einer vorteilhaften Ausführungsform der Erfindung, erfolgt Schritt c) in Verbindung mit Schritt b) automatisiert.

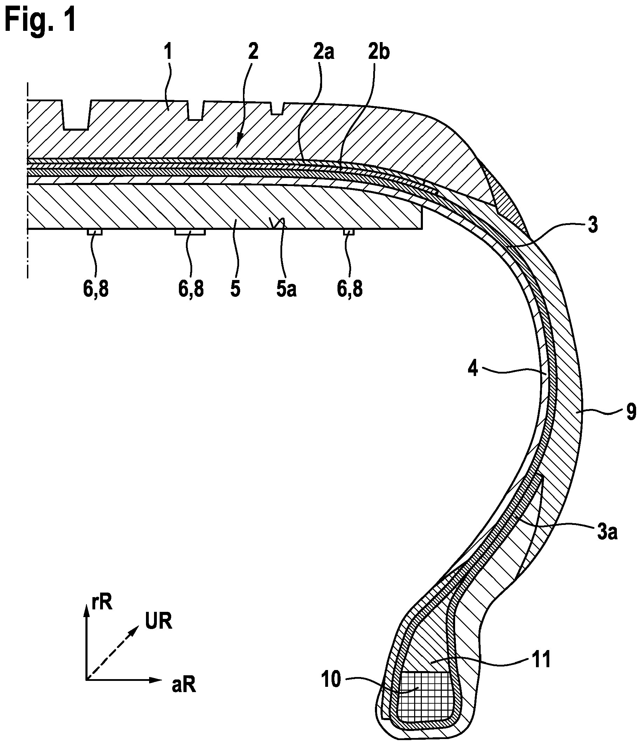

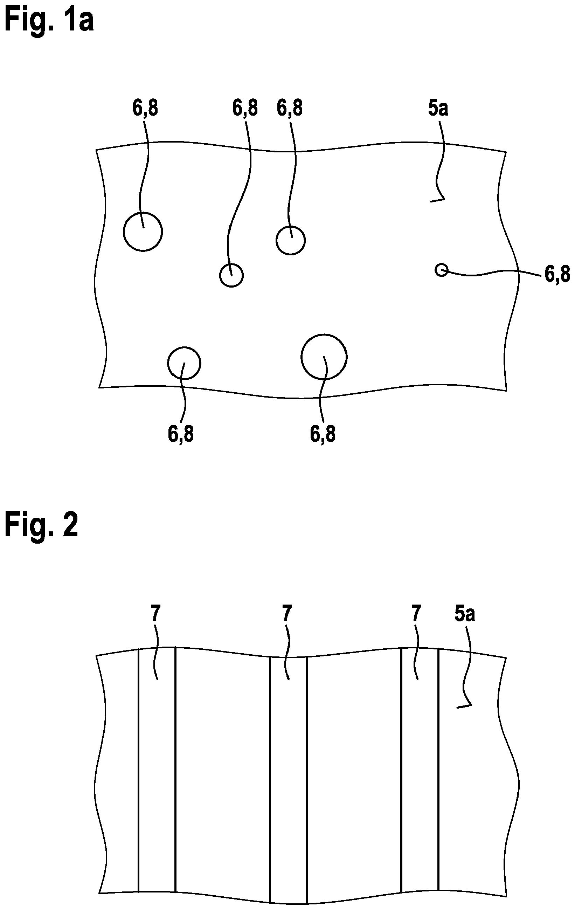

Weitere Einzelheiten der Erfindung werden anhand der Figuren 1 bis 3, die beispielhafte schematische Darstellungen sind, näher erläutert.

Die wesentlichen Bestandteile, aus welchen sich der erfindungsgemäße Fahrzeugluftreifen zusammensetzt, sind ein profilierter Laufstreifen 1, ein bei der gezeigten Ausführung aus zwei Lagen 2a, 2b bestehendes Gürtelpaket 2, eine einlagige Karkasse 3, welche um die Wulstkerne 10 und Wulstkernprofile 11 von axial innen nach axial außen herumgeführt ist und im Karkasshochschlag 3a endet, sowie Seitenwände 9. Die beiden Lagen 2a, 2b des Gürtelpakets 2 bestehen aus in eine Gummimischung eingebetteten Festigkeitsträgern aus Stahlcord, welche innerhalb jeder Lage parallel zueinander verlaufen, wobei die Stahlcorde der einen Lage 2a in kreuzender Anordnung zu den Stahlcorden der zweiten Lage 2b orientiert sind und mit der Reifenumfangsrichtung jeweils einen Winkel zwischen 15° und 45° einschließen. Auch die einlagige Karkasse 3 kann in herkömmlicher und bekannter Weise ausgeführt sein und somit in eine Gummimischung eingebettete, in radialer Richtung verlaufende Verstärkungsfäden aus einem textilen Material oder aus Stahlcord aufweisen. Die Selbstdichtung des Fahrzeugluftreifens ist durch eine nach der Vulkanisation des Fahrzeugluftreifens nachträglich radial innen umlaufend aufgebrachte Dichtmittellage 5 erhalten. Die Dichtmittellage 5 weist im Wesentlichen die Breite des Gürtelpakets 2 auf und ist im Wesentlichen in dessen Projektion angeordnet und weist einen in der die Reifenachse beinhaltenden Querschnittsebene ausgebildeten Querschnitt mit einer radial nach innen gerichteten in axialer Richtung, im Wesentlichen parallel zum Gürtelpaket, verlaufende Oberfläche 5a auf.

Gemäß dem Beispiel in Figur 1 ist radial einwärts auf der Dichtmittellage 5, also auf der radial nach innen gerichteten Oberfläche 5a der Dichtmittellage 5, ein Lumineszenzagens 6 angeordnet.

Das Lumineszenzagens 6 ist gemäß Figur 1 in einzelnen räumlichen Bereichen 8 statistisch verteilt aufgebracht, was in Fig 1a nochmal aus der Draufsicht illustriert ist. Fig 1a zeigt dabei einen schematischen Ausschnitt der Draufsicht auf die nach radial innen gerichteten Oberfläche 5a.

In Fig. 2 ist ebenfalls ein schematischer Ausschnitt der Draufsicht auf die nach radial innen gerichteten Oberfläche 5a gezeigt. Gemäß Figur 2 ist das Lumineszenzagens 6 in Form mehrerer paralleler Streifen 7 aufgebracht. Es können beispielsweise drei (s. Fig. 2) oder vier Streifen (in den Figuren nicht gezeigt) sein.

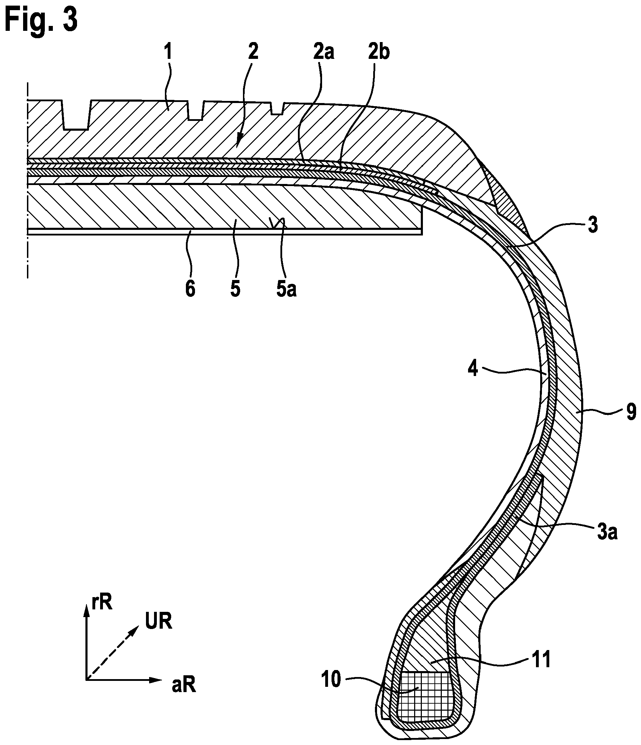

Gemäß Figur 3 bedeckt das Lumineszenzagens 6 nahezu die gesamte Oberfläche 5a.

Beispielsweise ist das Lumineszenzagens 6 in einer Lösung oder Suspension aufgetragen. Die Flüssigkeit der Lösung oder Suspension ist beispielsweise Wasser, wobei als Bindemittel ferner Styrol-Acrylat-Copolymer enthalten sein kann.

Das Lumineszenzagens 6 kann jedes der oben genannten Agenzien sein, welches in Wasser lösbar oder suspensierbar ist, wie z. B. Rhodamine 6G.

Das Dichtmittel selbst ist schwarz ausgebildet. Es enthält zur Verstärkung wenigstens einen Ruß, insbesondere N 326, und die oben genannte Zusammensetzung.

Nach Anregung, insbesondere durch Licht im Wellenlängenbereich von 200 bis 700 nm, kann die Lumineszenz durch Emission von Licht im Wellenlängenbereich von 350 bis 800 nm entweder durch einen Operator erkannt oder mittels einer Photodiode detektiert werden.

Der beispielhaft beschriebene Fahrzeugluftreifen kann nun gemäß dem erfindungsgemäßen Verfahren von Fahrzeugluftreifen ohne Dichtmittel wie beschrieben durch die Lumineszenz unterschieden werden.

Hierdurch können erfindungsgemäße Fahrzeugluftreifen mit Dichtmittel und Fahrzeugluftreifen ohne Dichtmittel in einem erfindungsgemäßen beispielsweise automatisierten Verfahren voneinander unterschieden, räumlich separiert und unterschiedlichen Recycling-Verfahren zugeführt werden. Dabei werden beim erfindungsgemäßen Reifen zunächst in einem zusätzlichen Schritt Dichtmittel und Lumineszenzagens vom Reifen entfernt.

### Bezugszeichenliste

### (Teil der Beschreibung)

- 1: Laufstreifen
- 2: Gürtelpaket
- 2a: Gürtellage
- 2b: Gürtellage
- 3: Karkasse
- 3a: Karkasshochschlag
- 4: Innenschicht
- 5: Dichtmittellage
- 5a: radial nach innen gerichtete in axialer Richtung, im Wesentlichen parallel zum Gürtelpaket, verlaufende Oberfläche der Dichtmittellage
- 6: Lumineszenzagens
- 7: Streifen
- 8: räumlicher Bereich
- 9: Seitenwand
- 10: Wulstkern
- 11: Wulstkernprofil

- rR: radiale Richtung
- aR: axiale Richtung
- UR: Umlaufrichtung des Reifens

## Patentansprüche

1. Fahrzeugluftreifen, der eine Dichtmittellage (5) wenigstens auf der dem Laufstreifen (1) gegenüberliegenden Innenfläche aufweist, wobei die Dichtmittellage (5) eine radial nach innen gerichtete in axialer Richtung, im Wesentlichen parallel zum Gürtelpaket, verlaufende Oberfläche (5a) aufweist, **dadurch gekennzeichnet, dass** die Dichtmittellage (5) auf ihrer radial nach innen gerichteten Oberfläche (5a) wenigstens ein Lumineszenzagens (6) aufweist.

2. Fahrzeugluftreifen nach Anspruch 1, **dadurch gekennzeichnet, dass** das Lumineszenzagens (6) ein Fluoreszenzagens oder Phosphoreszenzagens ist.

3. Fahrzeugluftreifen nach einem der vorherigen Ansprüche, **dadurch gekennzeichnet, dass** das Lumineszenzagens (6) Licht im Wellenlängenbereich von 200 bis 700 nm absorbiert und im Bereich von 350 bis 800 nm emittiert.

4. Fahrzeugluftreifen nach einem der vorherigen Ansprüche, **dadurch gekennzeichnet, dass** das Lumineszenzagens (6) mittels einer Dispersion, insbesondere Suspension oder Emulsion, oder einer Lösung aufgetragen ist, wobei die Dispersion oder die Lösung von 1 bis 80 Gew.-% an Lumineszenzagenzien enthält.

5. Fahrzeugluftreifen nach Anspruch 4, **dadurch gekennzeichnet, dass** die Flüssigkeit der Lösung oder Dispersion, wie insbesondere Suspension oder Emulsion, Wasser umfasst.

6. Fahrzeugluftreifen nach einem der Ansprüche 1 bis 3, **dadurch gekennzeichnet, dass** das Lumineszenzagens (6) Bestandteil einer Folie ist.

7. Fahrzeugluftreifen nach einem der Ansprüche 1 bis 3, **dadurch gekennzeichnet, dass** das Lumineszenzagens (6) als Feststoff, insbesondere in Pulverform, aufgetragen ist.

8. Fahrzeugluftreifen nach einem der vorherigen Ansprüche, **dadurch gekennzeichnet, dass** das Lumineszenzagens (6) umlaufend in Form eines oder mehrerer Streifen(s) (7) angeordnet ist, wobei der oder die Streifen durchgängig oder unterbrochen sein kann/können.

9. Fahrzeugluftreifen nach einem der vorherigen Ansprüche, **dadurch gekennzeichnet, dass** das Lumineszenzagens (6) in einzelnen räumlichen Bereichen (8) auf der Oberfläche (5a) der Dichtmittellage (5) angeordnet ist.

10. Fahrzeugluftreifen nach einem der vorherigen Ansprüche, **dadurch gekennzeichnet, dass** das Lumineszenzagens (6) 0,01 bis 100 % der nach radial einwärts gerichteten Oberfläche (5a) der Dichtmittellage (5) bedeckt.

11. Verfahren zur Detektion eines Fahrzeugluftreifens gemäß Anspruch 1 zum Unterscheiden von Fahrzeugluftreifen aufweisend ein Dichtmittel gegenüber Fahrzeugluftreifen ohne Dichtmittel, wobei die Dichtmittellage (5) aufgrund des wenigstens einen Lumineszenzagenzes (6) nach Energiezufuhr optisch von einem Operator oder mittels eines Detektors, insbesondere einer Photodiode, erkannt wird.

12. Verfahren zum Recycling eines Fahrzeugluftreifens gemäß Anspruch 1, umfassend wenigstens die folgenden Verfahrensschritte:
A) Bereitstellung des Fahrzeugluftreifens gemäß Anspruch 1;
B) Durchführung des Verfahrens nach Anspruch 11;
C) Abtrennen des Dichtmittels von dem Fahrzeugluftreifen;
D) anschließende Zerkleinerung des Fahrzeugluftreifens ohne Dichtmittel.

13. Verfahren zum Recycling von Fahrzeugluftreifen umfassend wenigstens die folgenden Verfahrensschritte:
a) Bereitstellung von zu recycelnden Fahrzeugluftreifen;
b) Durchführung des Verfahrens nach Anspruch 11;
c) Räumliche Separation von Fahrzeugluftreifen aufweisend ein Dichtmittel von Fahrzeugluftreifen ohne Dichtmittel;
d) Recycling von Fahrzeugluftreifen ohne Dichtmittel umfassend die Zerkleinerung der Fahrzeugluftreifen;
e) Überführung von Fahrzeugluftreifen aufweisend ein Dichtmittel zu einem separaten Recycling-Prozess umfassend das Abtrennen des Dichtmittels und erst die anschließende Zerkleinerung der Fahrzeugluftreifen.

## Claims

1. Pneumatic vehicle tire which comprises a sealant layer (5) at least on the inner surface opposite the tread (1), wherein the sealant layer (5) has a radially inward-facing surface (5a) running in the axial direction substantially parallel to the belt package,
**characterized in that** the sealant layer (5) comprises at least one luminescent agent (6) on its radially inward-facing surface (5a).

2. Pneumatic vehicle tire according to Claim 1, **characterized in that** the luminescent agent (6) is a fluorescent agent or phosphorescent agent.

3. Pneumatic vehicle tire according to either of the preceding claims, **characterized in that** the luminescent agent (6) absorbs light in the wavelength range from 200 to 700 nm and emits light in the range from 350 to 800 nm.

4. Pneumatic vehicle tire according to any of the preceding claims, **characterized in that** the luminescent agent (6) has been applied by means of a dispersion, in particular suspension or emulsion, or a solution, wherein the dispersion or the solution contains from 1% to 80% by weight of luminescent agents.

5. Pneumatic vehicle tire according to Claim 4, **characterized in that** the liquid of the solution or dispersion, such as in particular suspension or emulsion, comprises water.

6. Pneumatic vehicle tire according to any of Claims 1 to 3, **characterized in that** the luminescent agent (6) is a constituent of a film.

7. Pneumatic vehicle tire according to any of Claims 1 to 3, **characterized in that** the luminescent agent (6) has been applied in the form of a solid, in particular in powder form.

8. Pneumatic vehicle tire according to any of the preceding claims, **characterized in that** the luminescent agent (6) has been arranged circumferentially in the form of one or more strip(s) (7), wherein the strip(s) may be continuous or interrupted.

9. Pneumatic vehicle tire according to any of the preceding claims, **characterized in that** the luminescent agent (6) has been arranged on the surface (5a) of the sealant layer (5) in individual spatial regions (8).

10. Pneumatic vehicle tire according to any of the preceding claims, **characterized in that** the luminescent agent (6) covers 0.01% to 100% of the radially inward-facing surface (5a) of the sealant layer (5).

11. Process for detecting a pneumatic vehicle tire according to Claim 1 to distinguish pneumatic vehicle tires comprising a sealant from pneumatic vehicle tires without a sealant, wherein the sealant layer (5) is identified optically by an operator or using a detector, in particular a photodiode, after supply of energy as a result of the at least one luminescent agent (6).

12. Process for recycling a pneumatic vehicle tire according to Claim 1, comprising at least the process steps of:
A) providing the pneumatic vehicle tire according to Claim 1;
B) performing the process according to Claim 11;
C) separating the sealant from the pneumatic vehicle tire;
D) subsequently comminuting the pneumatic vehicle tire without sealant.

13. Process for recycling pneumatic vehicle tires comprising at least the process steps of:
a) providing pneumatic vehicle tires to be recycled;
b) performing the process according to Claim 11;
c) spatially separating pneumatic vehicle tires comprising a sealant from pneumatic vehicle tires without sealant;
d) recycling pneumatic vehicle tires without sealant comprising comminution of the pneumatic vehicle tires;
e) transferring pneumatic vehicle tires comprising a sealant to a separate recycling process comprising separation of the sealant and comminution of the pneumatic vehicle tires only subsequently.

## Revendications

1. Pneumatique de véhicule, qui présente une couche d'agent d'étanchéité (5) au moins sur la surface intérieure opposée à la bande de roulement (1), la couche d'agent d'étanchéité (5) présentant une surface (5a) dirigée radialement vers l'intérieur dans la direction axiale, s'étendant essentiellement parallèlement au paquet de ceinture, **caractérisé en ce que** la couche d'agent d'étanchéité (5) présente au moins un agent luminescent (6) sur sa surface (5a) dirigée radialement vers l'intérieur.

2. Pneumatique de véhicule selon la revendication 1, **caractérisé en ce que** l'agent luminescent (6) est un agent fluorescent ou un agent phosphorescent.

3. Pneumatique de véhicule selon l'une quelconque des revendications précédentes, **caractérisé en ce que** l'agent luminescent (6) absorbe la lumière dans la plage de longueurs d'onde de 200 à 700 nm et émet dans la plage de 350 à 800 nm.

4. Pneumatique de véhicule selon l'une quelconque des revendications précédentes, **caractérisé en ce que** l'agent luminescent (6) est appliqué au moyen d'une dispersion, notamment d'une suspension ou d'une émulsion, ou d'une solution, la dispersion ou la solution contenant de 1 à 80 % en poids d'agents luminescents.

5. Pneumatique de véhicule selon la revendication 4, **caractérisé en ce que** le liquide de la solution ou de la dispersion, telle que notamment la suspension ou l'émulsion, comprend de l'eau.

6. Pneumatique de véhicule selon l'une quelconque des revendications 1 à 3, **caractérisé en ce que** l'agent luminescent (6) est un constituant d'un film.

7. Pneumatique de véhicule selon l'une quelconque des revendications 1 à 3, **caractérisé en ce que** l'agent luminescent (6) est appliqué sous forme de matière solide, notamment sous forme de poudre.

8. Pneumatique de véhicule selon l'une quelconque des revendications précédentes, **caractérisé en ce que** l'agent luminescent (6) est agencé en circonférence sous la forme d'une ou plusieurs bandes (7), la ou les bandes pouvant être continues ou interrompues.

9. Pneumatique de véhicule selon l'une quelconque des revendications précédentes, **caractérisé en ce que** l'agent luminescent (6) est agencé dans des zones spatiales individuelles (8) sur la surface (5a) de la couche d'agent d'étanchéité (5).

10. Pneumatique de véhicule selon l'une quelconque des revendications précédentes, **caractérisé en ce que** l'agent luminescent (6) recouvre de 0,01 à 100 % de la surface (5a), dirigée radialement vers l'intérieur, de la couche d'agent d'étanchéité (5).

11. Procédé de détection d'un pneumatique de véhicule selon la revendication 1 pour distinguer des pneumatiques de véhicule présentant un agent d'étanchéité de pneumatiques de véhicule sans agent d'étanchéité, la couche d'agent d'étanchéité (5) étant identifiée optiquement par un opérateur ou au moyen d'un détecteur, notamment une photodiode, sur la base de l'au moins un agent luminescent (6) après apport d'énergie.

12. Procédé de recyclage d'un pneumatique de véhicule selon la revendication 1, comprenant au moins les étapes de procédé suivantes :
A) la fourniture du pneumatique de véhicule selon la revendication 1 ;
B) la mise en oeuvre du procédé selon la revendication 11 ;
C) la séparation de l'agent d'étanchéité du pneumatique de véhicule ;
D) le broyage subséquent du pneumatique de véhicule sans agent d'étanchéité.

13. Procédé de recyclage de pneumatiques de véhicule, comprenant au moins les étapes de procédé suivantes :
a) la fourniture de pneumatiques de véhicule à recycler ;
b) la mise en oeuvre du procédé selon la revendication 11 ;
c) la séparation spatiale de pneumatiques de véhicule présentant un agent d'étanchéité de pneumatiques de véhicule sans agent d'étanchéité ;
d) le recyclage des pneumatiques de véhicule sans agent d'étanchéité, comprenant le broyage des pneumatiques de véhicule ;
e) le transfert des pneumatiques de véhicule présentant un agent d'étanchéité vers un processus de recyclage séparé, comprenant la séparation de l'agent d'étanchéité et, seulement ensuite, le broyage subséquent des pneumatiques de véhicule.
